# EUROPEAN PATENT APPLICATION

(11) **EP 4 462 330 A1**
(43) Date of publication of application: **13.11.2024**
(21) Application number: 23737297.4
(22) Date of filing: 05.01.2023
(51) Int. Cl.: G06Q 20/02, G06Q 20/06, G06Q 20/38

(54) **TRANSACTION RECORDING SYSTEM, TRANSACTION RECORDING METHOD, RELAY DEVICE, AND UPDATE PROGRAM**

(30) Priority: 05.01.2022 JP 2022000469
(71) Applicant: Yokogawa Electric Corporation, Tokyo 180-8750 (JP)
(72) Inventor: KURODA, Tomohiro, Musashino-shi, Tokyo 180-8750 (JP); ISHII, Yosuke, Musashino-shi, Tokyo 180-8750 (JP); HAYASHIZAKI, Hironori, Musashino-shi, Tokyo 180-8750 (JP); SAKUMA, Kei, Musashino-shi, Tokyo 180-8750 (JP)
(74) Representative: Winter, Brandl - Partnerschaft mbB
(86) International application number: PCT/JP2023/000096
(87) International publication number: WO 2023/132346

(57) **Abstract**

A transaction recording system includes an application execution unit that executes an application that generates transaction information on crypto-assets, a relay unit that executes a relay program that makes a relay between an application and a blockchain network in which the transaction information is recorded, and an update unit that executes an update on the relay program.

## Description

### Field

The present invention relates to a transaction recording system, a transaction recording method, a relay device, and an updating program

### Background

Blockchain technologies have been utilized for recording transactions of tokens. A mediation server that mediates transactions relating to assets between a provider of the assets and a user of the assets by making a request to change the owner of the assets to a blockchain network has been disclosed as one of such technologies.

### Citation List

### Patent Literature

Patent Literature 1: Japanese Laid-open Patent Publication No. 2021-152847
Patent Literature 2: Japanese Laid-open Patent Publication No. 2002-109216
Patent Literature 3: Japanese Laid-open Patent Publication No. 2012-155718

### Summary

### Technical Problem

A conventional technology represented by the mediation server described above is realized by an application obtained by packaging a portal for users, such as a provider and a user, and an interface for blockchain platforms. Thus, the above-described technology has an aspect that it is necessary to replace or update the whole application in an update associated with a change in the specification of the blockchain platform.

In one aspect, an object of the present invention is to realize a reduction of replacements of or updates in an application.

### Solution to Problem

According to an aspect of an embodiment, a transaction recording system includes an application execution unit that executes an application that generates transaction information on crypto-assets, a relay unit that executes a relay program that makes a relay between the application and a blockchain network in which the transaction information is recorded, and an update unit that executes an update in the relay program.

According to an aspect of an embodiment, a transaction recording method includes executing an application that generates transaction information on crypto-assets, executing a relay program that makes a relay between the application and a blockchain network in which the transaction information is recorded, and executing an update in the relay program.

According to an aspect of an embodiment, a relay device includes a relay unit that executes a relay program that makes a relay between an application that generates transaction information on crypto-assets and a blockchain network in which the transaction information is recorded, and an update unit that executes an update in the relay program.

According to an aspect of an embodiment, an update program causes a relay device to execute a process including executing an update on a relay program that makes a relay between an application that generates transaction information on crypto-assets and a blockchain network in which the transaction information is recorded. Advantageous Effects of Invention

It is possible to realize a reduction of replacements of or updates in an application.

### Brief Description of Drawings

FIG. 1 is a diagram illustrating an example of a configuration of a transaction recording system.
FIG. 2 is a block diagram illustrating an example of a functional configuration of a relay device.
FIG. 3 is a sequence chart illustrating a procedure of an application registration process.
FIG. 4 is a sequence chart illustrating a procedure of an application deletion process.
FIG. 5 is a sequence chart illustrating a procedure of an application editing process.
FIG. 6 is a sequence chart illustrating a procedure of a wallet generation process.
FIG. 7 is a sequence chart illustrating a procedure of a wallet reference process.
FIG. 8 is a sequence chart illustrating a procedure of a token definition process.
FIG. 9 is a sequence chart illustrating a procedure of a token invalidation process.
FIG. 10 is a sequence chart (1) illustrating a procedure of a transaction registration process.
FIG. 11 is a sequence chart (2) illustrating the procedure of the transaction registration process.
FIG. 12 is a sequence chart illustrating a procedure of a transaction reference process.
FIG. 13 is a sequence chart illustrating a procedure of a smart contract registration process.
FIG. 14 is a sequence chart illustrating a procedure of a smart contract invalidation process.
FIG. 15 is a sequence chart illustrating a procedure of an update process.
FIG. 16 is a diagram illustrating an example of a hardware configuration.

### Description of Embodiments

With reference to the accompanying drawings, an embodiment of a transaction recording system, a transaction recording method, a relay device, and an update program according to the present application will be described below with reference to the accompanying drawings. Each embodiment represents an example or a side only and such exemplification does not limit the range of numerical values and functions, the scene of use, etc. Each embodiment can be combined as appropriate within a range in which the content of processing is not inconsistent.

### <System Configuration>

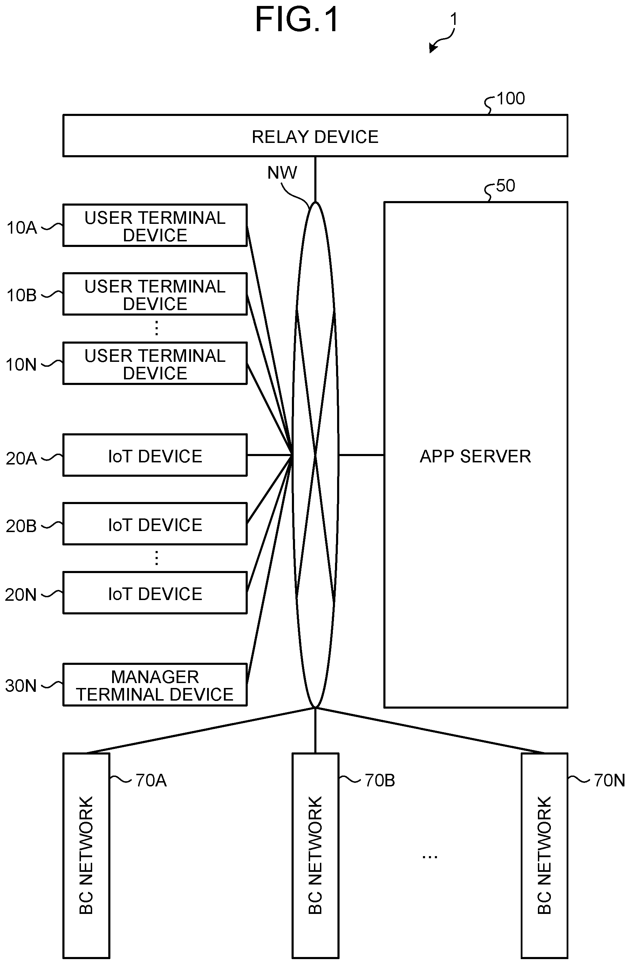

FIG. 1 is a diagram illustrating an example of a configuration of a transaction recording system. A transaction recording system 1 illustrated in FIG. 1 provides a platform for recording transaction information in a token economy in a blockchain.

As illustrated in FIG. 1, the transaction recording system 1 includes user terminal devices 10A to 10N, IoT (Internet of Things) devices 20A to 20N, an administrator terminal device 30, an APP (Application) server 50, BC (Blockchain) networks 70A to 70N, and a relay device 100.

When each of the individuals of the user terminal devices 10A to 10N need not be distinguished, the user terminal device is sometimes referred to as a "user terminal device 10" below. Similarly, when each of the individuals of the IoT devices 20A to 20N need not be distinguished, the IoT device is sometimes referred to as an "IoT device 20". Similarly, when each of the individuals of the BC networks 70A to 70N need not be distinguished, the BC network is sometimes referred to as a "BC network 70".

The user terminal devices 10, the IoT devices 20, the administrator terminal device 30, the APP server 50, the BC networks 70, and the relay device 100 are connectable via a network NW such that they can communicate. The network NW may be realized using a freely-selected technology, such as an Internet technology, industrial communication standards, or power-saving communication standards for the IoT, regardless whether it is wired or wireless.

The user terminal device 10 is a terminal device that is used by a user who participates in a token economy. The user terminal device 10 may be realized using a freely-selected information processing device, such as a personal computer, a smartphone, a tablet terminal device, or a wearable terminal device.

The IoT device 20 is a device that has, as one aspect, a function of connecting a freely-selected sensor not illustrated in the drawings to the network NW. The IoT device 20 may have an I/O (Input/Output) function of making a connection to one or a plurality of sensors. For example, when the I/O function is realized by wired communication, the function may be realized using a UART (Universal Asynchronous Receiver/Transmitter). When the I/O function is realized by wireless communication, the function may be realized by near field communication, such as BLE (Bluetooth (trademark) Low Energy) or RFID (Radio Frequency Identification).

The administrator terminal device 30 is a terminal device that is used by an administrator of the token economy. The "administrator" herein includes concerned parties, such as an operator of the token economy, for example, an issuer of tokens and a business operator who operates the transaction recording system 1. As in the case of the user terminal device 10, the administrator terminal device 30 may be realized using a freely-selected information processing device, such as a personal computer, a smartphone, a tablet terminal device, or a wearable terminal device.

The APP server 50 is a server device that executes an application for the user terminal devices 10 and the IoT devices 20. It is possible to implement the APP server 50 by installing the above-described application in a freely-selected computer as package software or online software as one embodiment. For example, by realizing the APP server 50 as a SaaS (Software as a Service) application, it is possible to provide a service corresponding to the above-described application as a cloud service. It is also possible to realize the APP server 50 as a server that provides services corresponding to the above-described application on the premises.

The "application" referred herein has, as one aspect, a function of generating token transaction information, for example, information on a user who makes a transaction and the number of tokens that are received in the transaction according to the usage of the user terminal device 10 or the status of sensing by the IoT device 20.

For example, the application generates information on transactions in a form of issuance of tokens to users and exchange of tokens between users as a motivation for users who belong to a community forming the token economy to autonomously take action.

It is possible to use such an application in scenes of use, such as promotion of visualization of characteristics of company members and communications in a company, promotion of resources recycling in a supply chain, and improvement of a KPI (Key Performance Indicator) of an organization.

For example, when visualization of characteristics of company members in a company is taken as an example, the application may be realized as a comment posting tool from the aspect of grasping contribution of Q&A of questions and answers. In this case, the comment posting tool issues tokens to users who meet a condition on the number of times a question or a comment is made. In addition to this, the application may be realized as a task progress administration tool from the aspect of grasping the progress of the task. In this case, the progress administration tool issues tokens to users who meet a condition in the frequency of uploading the progress of the task or the progress of the task or moves tokens from a user corresponding to a lower given number in progress to a user corresponding to an upper given number in progress.

The BC network 70 is a P2P (Peer to Peer) network used to administer a P2P network.

The blockchain is one of distributed ledger technologies in which a plurality of nodes configuring a P2P network stores the same database. In a blockchain, a group of transactions in the P2P network are collectively processed as a block and blocks are linked using hash functions. It is not possible to retrospectively change the data of the blocks recorded in the blockchain unless all the subsequent blocks are changed and a platform of ledger administration using a blockchain is highly secure.

A freely-selected method, such as PoW (Proof of Work) or PoS (Proof of Stake), is usable for a consensus algorithm that is used between nodes forming the BC network 70.

In the blockchain, an electronic signature using a private key is assigned to transaction data, thereby preventing impersonation. A public-key cryptography need not necessarily be used to encrypt the transaction data. For example, a freely-selected encryption algorithm, such as AES (Advanced Encryption Standard), SHA (Secure Hash Algorithm), RSA (Rivest-Shamir-Adleman cryptosystem), or ECC (Elliptic Curve Cryptography), is usable.

Data on each transaction is made open and is shared over the BC network 70. Depending on the type of a P2P database, the same record need not necessarily be stored over the P2P network.

A freely-selected method, such as PoW or PoS is usable for a consensus algorithm that is used between the nodes forming the BC network 70.

### <One Aspect of Problem>

As described in the column of the above-described background technology, the above-described conventional technology is realized using an application obtained by packaging a portal for users and an interface for blockchain platforms. The above-described conventional technology thus has an aspect that it is necessary to replace or update the whole application in an update associated with a change in the specification of the blockchain platform.

### <One Aspect of Approach to Solution to Problem>

In the transaction recording system 1 according to the embodiment, from an aspect that a portal to users and an interface for blockchain platforms are separated, a relay function of making a relay between the APP server 50 and the BC network 70 is constructed as an independent module. Accordingly, it is possible to update only a module corresponding to the above-described relay function in an update associated with a change in the specification of the blockchain platform.

The relay device 100 having the above-described relay function is constructed in the transaction recording system 1 as an example only. The relay device 100 can be implemented by installing software corresponding to the above-described relay function in a freely-selected computer as package software or online software as one embodiment. For example, realizing the relay device 100 as a SaaS application makes it possible to provide the above-described relay function as a cloud service. In addition to this, it is possible to realize the relay device 100 as a server that provides the above-described function on the premises.

According to the transaction recording system 1 according to the embodiment, it is thus possible to realize a reduction of replacements of or updates in the application. Therefore, the application administrator is able to focus on updates in and administration of the application, which leads to a reduction of the administration cost.

Note that, as for the transaction recording system 1 illustrated in FIG. 1, the example in which the relay device 100 having the above-described relay function is realized as a machine independent of the APP server 50 is taken an example only; however, the example is not limited to this. For example, the above-described application and the above-described relay function may be realized as different virtual machines, respectively, through a freely-selected virtualization technology. In this case, it is not possible to prevent the above-described application and the above-described relay function from being operated on the same physical machine or from being realized as a platform obtained by packaging both the application and the relay function or a cloud service.

### <Configuration of Relay Device 100>

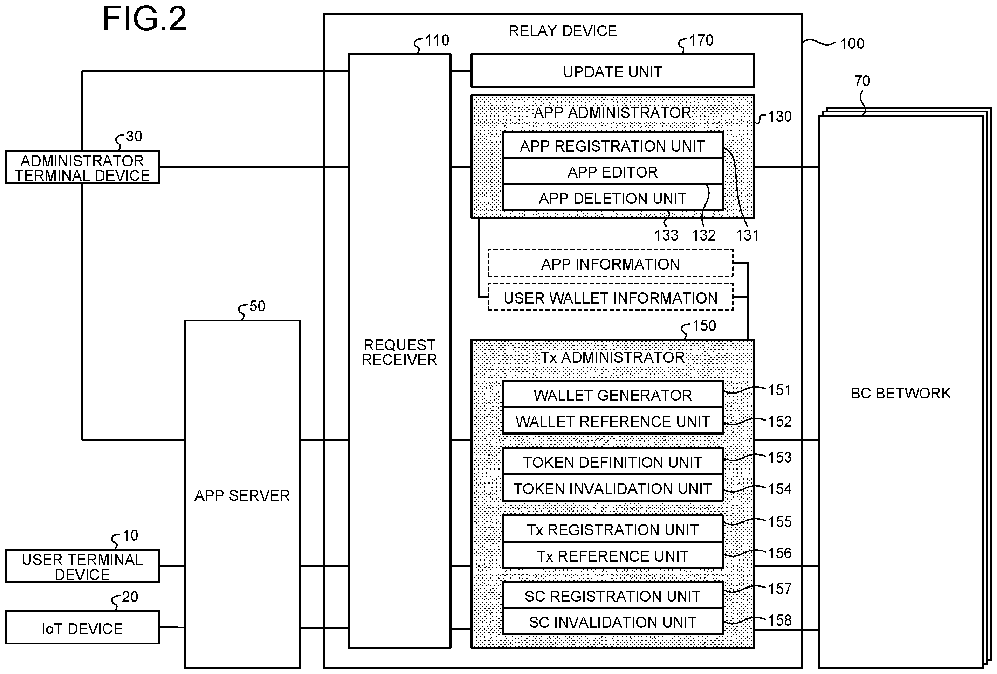

An example of a functional configuration of the relay device 100 having the relay function according to the embodiment will be described next. FIG. 2 is a block diagram illustrating the example of the functional configuration of the relay device 100. FIG. 2 schematizes blocks of functions corresponding to the above-described relay function.

As illustrated in FIG. 2, the relay device 100 includes a request receiver 110, an APP administrator 130, a Tx (transaction) administrator 150, and an update unit 170.

The function units of the request receiver 110, the APP administrator 130, the Tx administrator 150, and the update unit 170 are realized by a hardware processor. For example, a CPU (Central Processing Unit), a MPU (Micro Processing Unit), a GPU (Graphics Processing Unit), and GPGPU (General-Purpose computing on GPU) are taken as an example of the hardware processor. A processor reads, in addition to an OS (Operating System), a relay program corresponding to the above-described relay function from a storage not illustrated in the drawings, for example, a HDD (Hard Disk Drive), an optical disk, or a SSD (Solid State Drive). By executing the above-described relay program, the processor then loads a process corresponding to the above-described function unit in a memory, such as a RAM (Random Access Memory). As described above, as a result of execution of the above-described relay program, the above-described function units are realized virtually as the process. In addition to this, the above-described function units may be realized using a hard wired logic, such as an ASIC (Application Specific Integrated Circuit) or a FPGA (Filed Programmable Gate Array).

The request receiver 110 is a processing unit that receives various types of requests. A "request" herein may include, as an exemplification only, ones relating to "application", "wallet", "token", "smart contract", or "transaction".

The request receiver 110 receives a request to register, edit, or delete an application that is executed by the APP server 50 from the administrator terminal device 30 as one aspect. The request receiver 110 receives a request to register or refer to a wallet from the administrator terminal device 30 as another aspect. The request receiver 110 receives a request to define or invalidate a token from the administrator terminal device 30 as a further aspect. The request receiver 110 receives a request to register or invalidate a smart contract from the administrator terminal device 30 as another aspect. The request receiver 110 receives a request to register a transaction or refer to a transaction from the APP server 50 as a further aspect.

The APP administrator 130 is a processing unit that administers the application that is executed by the APP server 50. As illustrated in FIG. 1, the APP administrator 130 includes an APP registration unit 131, an APP deletion unit 132, and an APP editor 133.

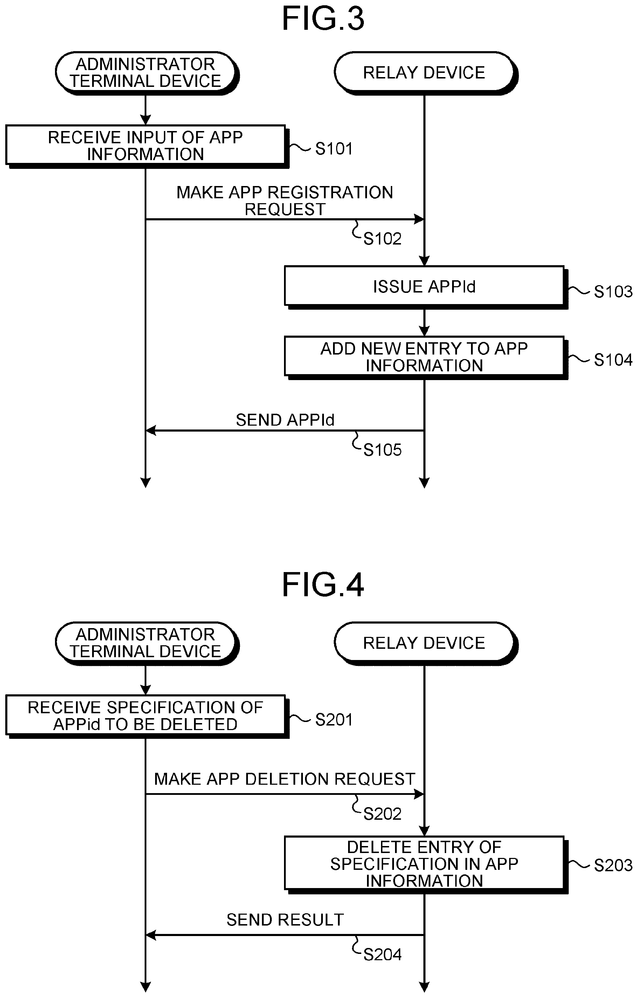

The APP registration unit 131 is a processor that registers a setting relating to the application. FIG. 3 is a sequence chart illustrating a procedure of an application registration process. As illustrated in FIG. 3, the administrator terminal device 30 receives an input of APP information on a setting in the application via a registration window that the APP registration unit 131 provides (step S101). At step S101 described above, it is possible to receive an input of APP information only in the case where an account of an administrator authority that is assigned to the operator of the token economy, or the like, has been authenticated.

The case where a HTML (HyperText Warkup Language) source of the registration widow is provided from the relay device 100 to the administrator terminal device 30 is exemplified as an exemplification only.

In this case, the registration window can be rendered into a general-purpose browser. For example, the registration window can incorporate, GUI parts enabling specification of items, such as an application password and a first blockchain platform in which a record is made in an initial setting, as an example of APP information, items, such as an application name, an application administrator. Note that GUI is an abbreviation of "Graphical User Interface".

After receiving the input of the APP information, the administrator terminal device 30 transmits an application registration request to the relay device 100 (step S102) .

When the application registration request is received via the request receiver 110 in this manner, the APP registration unit 131 assigns identification information that identifies the application, for example, an APPid (step S103) .

The APP registration unit 131 adds a new entry in which items that are input via the above-described registration window are associated with the APPid that is assigned at step S103 to the APP information that is stored in a storage not illustrated in the drawing (step S104).

Thereafter, the APP registration unit 131 sends a response containing the APPid that is assigned at step S103 to the administrator terminal device 30 (step S105) and ends the process.

Such a process makes it possible to specify a first blockchain platform in which token transaction information is recorded in APP registration among the BC networks 70A to 70N that are provided with respect to a plurality of blockchain platforms, respectively. Accordingly, it is possible to deal with the blockchain platforms using a single interface not relying on a specific blockchain platform.

The APP deletion unit 132 is a processing unit that deletes a setting relating to the application. FIG. 4 is a sequence chart illustrating a procedure of an application deletion process. As illustrated in FIG. 4, the administrator terminal device 30 receives an input relating to deletion of an application via a deletion window that the APP deletion unit 132 provides (step S201). Note that, at step S201, it is possible to receive an input relating to deletion of an application only in the case where the account of the administrator authority that is assigned to the operator of the token economy, or the like, has been authenticated.

For example, the deletion window can incorporate GUI parts enabling specification of items, such as an application name and an application password, as an example of the input relating to deletion of an application. The example in which an application name is input is taken herein; however, an APPid corresponding to the application name may be input.

After receiving the application deletion input, the administrator terminal device 30 transmits an application deletion request to the relay device 100 (step S202) .

When the application deletion request is received via the request receiver 110 in this manner, the APP deletion unit 132 executes the following process. In other words, the APP deletion unit 132 deletes an entry corresponding to the application name or APPid on which specification is received via the deletion window at step S2-1 (step S203).

Thereafter, the APP deletion unit 132 sends a response containing a success or a failure of deletion that is executed at step S203 (step S204) and ends the process.

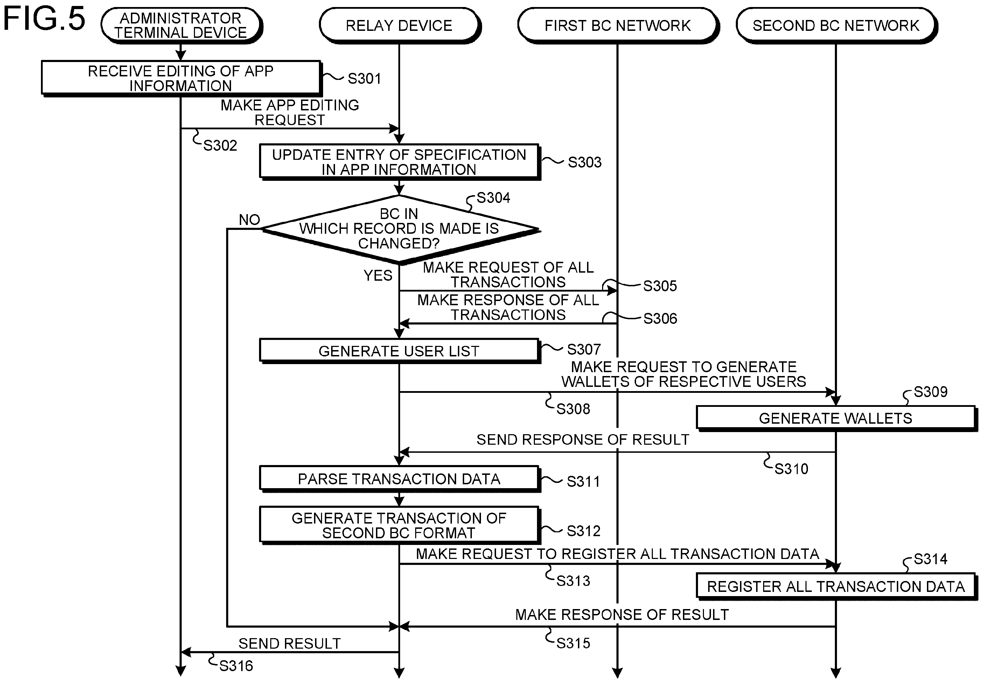

The APP editor 133 is a processing unit that edits the setting relating to the application. FIG. 5 is a sequence chart illustrating a procedure of an application editing process. As illustrated in FIG. 5, the administrator terminal device 30 receives an input of content relating to application editing via an editing window that the APP editor 133 provides (step S301). Note that, at step S301, it is possible to receive an input relating to application editing only in the case where the account of the administrator authority that is assigned to the administrator of the token economy, or the like, has been authenticated.

The editing window can incorporate GUI parts enabling specification of items, such as an application name, an application administrator, an application password, and a second blockchain platform to which a change is made, as an example of the content relating to application editing.

After receiving the application editing input, the administrator terminal device 30 transmits an application editing request to the relay device 100 (step S302) .

When the application editing request is received via the request receiver 110 in this manner, the APP editor 133 executes the following process. In other words, the APP editor 133 updates the content of an entry corresponding to the application name or the APPid of which specification is received via the editing window to content of which editing is received via the editing window (step S303) .

At that time, when the blockchain platform in which a record is made is changed in the editing via the editing window (S304 Yes), the APP editor 133 executes the following process. In other words, the APP editor 133 transmits a request to refer to transaction data on all transactions to the first BC network 70A corresponding to the blockchain platform before the change, for example, the first blockchain platform that is set when the application is registered (step S305). Note that, when the blockchain platform in which a record is made is not changed (step S304 No), a move to step S316 is made.

In response to the request, the first BC network 70A corresponding to the first blockchain platform transmits a response of the transaction data on all the transactions to the relay device 100 (step S306).

Subsequently, the APP editor 133 extracts users contained in the transaction data on all the transactions obtained from the response at step S306, thereby generating a list of the users (step S307).

The APP editor 133 then transmits a request to generate a wallet of each user according to the list of the users that is generated at step S307 to the second BC network 70B corresponding to the second blockchain platform (step S308).

In response to the request, the second BC network 70B corresponding to the second blockchain platform generates wallets of the respective users (step S309). The second BC network 70B then transmits a result of generating wallets of the respective users, for example, a response of a success or a failure to the relay device 100 (step S310).

Furthermore, the APP editor 133 parses the transaction data on all the transactions obtained from the response at step S306 (step S311).

Accordingly, the transaction information on tokens between users, for example, users who make a transaction or the number of tokens received in the transaction is obtained with respect to each transaction. A "transaction" herein can include token provision of issuing a token from an issuer to a user and token exchange of exchanging tokens between users.

Using the transaction information obtained with respect to each transaction in the parsing at step S311, the APP editor 133 generates transaction data corresponding to the format of the second blockchain platform (step S312) .

The APP editor 133 then makes a request to register all the transaction data that is generated with respect to each transaction at step S312 to the second BC network 70B corresponding to the second blockchain platform (step S313).

In response to the request, the second BC network 70B corresponding to the second blockchain platform registers all the transaction data in the blockchain (step S314). The second BC network 70B then transmits the result of registration of all the transaction data, for example, a response of a success or a failure to the relay device 100 (step S315).

Thereafter, the APP editor 133 sends a response containing a success or a failure of editing at step S303 and registration of migration of the transaction data from the first BC network 70A to the second BC network 70B to the administrator terminal device 30 (step S316) and ends the process.

Such a process enables a change to a blockchain platform among the blockchain platforms as an aspect. In other words, in the current state where various blockchain platforms are provided, the blockchain platforms have different advantages and disadvantages and thus it is not sure which platform serves as a de facto standard. Under such circumstances, even when a better block chain platform appears, the technical meaning of enabling a change to a blockchain platform is significant.

Furthermore, it is possible to automate a process required when changing the blockchain platform, for example, registration of migration of the transaction data. Furthermore, even when the blockchain platform in which a record is made changes, it is possible to perform processing while keeping accesses to the same device.

The Tx administrator 150 is a processing unit that administers transactions. As illustrated in FIG. 1, the Tx administrator 150 includes a wallet generator 151, a wallet reference unit 152, a token definition unit 153, a token invalidation unit 154, a Tx registration unit 155, a Tx reference unit 156, a SC (Smart Contract) registration unit 157, and a SC invalidation unit 158.

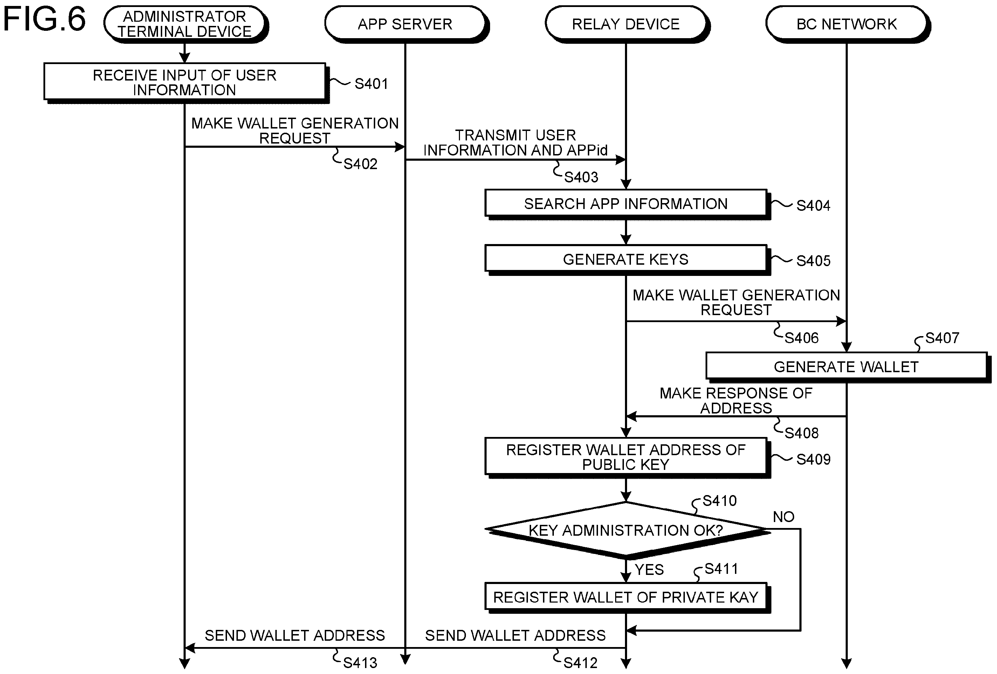

The wallet generator 151 is a processing unit that relays generation of a wallet of a user who participates in the token economy. FIG. 6 is a sequence chart illustrating a procedure of a wallet generation process. As illustrated in FIG. 6, the administrator terminal device 30 receives an input of user information on a new user who participates in the token economy via a user information window that the wallet generator 151 provides (step S401).

For example, the user information window can incorporate GUI parts enabling specification of items, such as a user name, a key generation passphrase, and a key administration option, as an example of the user information.

After receiving the input of the user information, the administrator terminal device 30 transmits a wallet generation request containing the user information that is received at step S401 to the APP server 50 (step S402) .

The APP server 50 having received the wallet generation request in this manner further incorporates an APPid of an application that the new user uses in the wallet generation request and transmits the request to the relay device 100 (step S403).

The wallet generator 151 of the relay device 100 searches the entries contained in the APP information for an entry corresponding to the APPid contained in the wallet generation request that is received from the APP server 50 (step S404).

Subsequently, the wallet generator 151 generates key information, for example, a private key and a public key, from the user information, for example, a key generation passphrase that is received via the user information window (step S405). The wallet generator 151 then transmits the wallet generation request containing the key information that is generated at step S405 to the BC network 70 (step S406) .

In response to the request, the BC network 70 generates wallet addresses of the new user based on the key information that is generated at step S405 (step S407) . The BC network 70 then transmits a response containing the wallet addresses generated at step S407 to the relay device 100 (step S408) .

Subsequently, the wallet generator 151 adds a new entry corresponding to the APPid of the application used by the new user and a user name of the new user to an entry contained in user wallet information that is stored in a storage not illustrated in the drawings, or the like, and registers a wallet address of the public key among the wallet addresses that are received from the BC network 70 in the new entry (step S409) .

When administration of the wallet address of the private key is set in the relay device 100 of a "system", for example, the transaction recording system 1 in the key administration options via the user information window (step S410 Yes), the wallet generator 151 executes the following process. In other words, the wallet generator 151 registers the wallet address of the private key in the entry corresponding to the user name of the new user among the entries contained in the user wallet information (step S411) .

A technology, such as PKI (Public Key Infrastructure), is usable to administer the pair of the private key and the public key.

Note that, when administration of the wallet address of the private key is set in "user" in the key administration option via the user information window (step S410 No), the wallet address of the private key is not registered.

Thereafter, the wallet generator 151 sends the wallet addresses of the new user to the administrator terminal device 30 via the APP server 50 (step S412 and step S413) and ends the process.

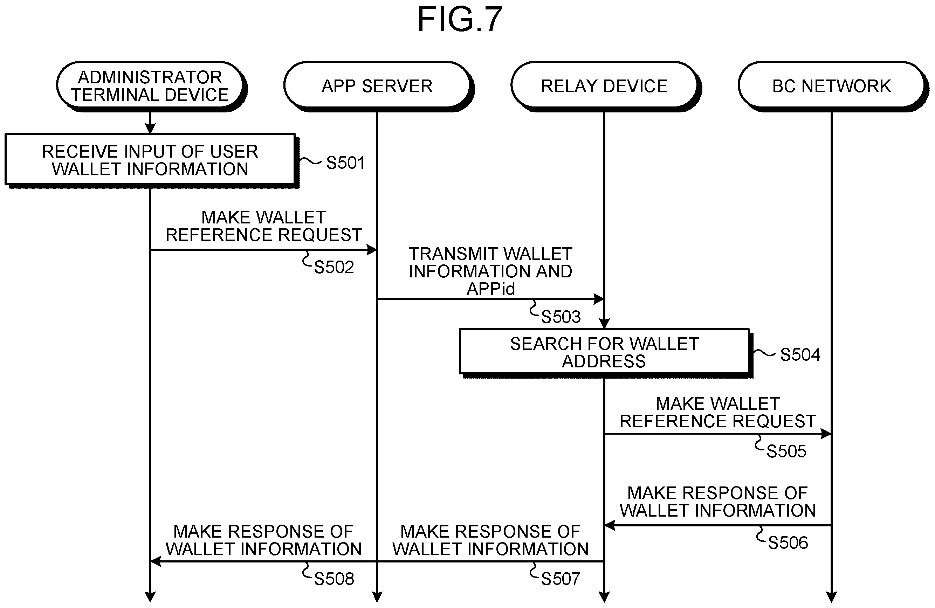

The wallet reference unit 152 is a processing unit that relays reference of a wallet. FIG. 7 is a sequence chart illustrating a procedure of a wallet reference process. The administrator terminal device 30 receives an input of user wallet information via a user wallet information window that the wallet reference unit 152 provides (step S501).

For example, the user wallet information window can incorporate GUI parts enabling specification of items, such as a user name and a token name, as an example of the user wallet information.

After receiving the user wallet information, the administrator terminal device 30 transmits a wallet reference request to the APP server 50 (step S502).

The APP server 50 having received the wallet reference request in this manner further incorporates an APPid of an application that the user uses in the wallet reference request and transmits the request to the relay device 100 (step S503).

The wallet reference unit 152 of the relay device 100 searches for a wallet address that is associated with the APPid and a user name that are contained in the wallet reference request received from the APP server 50 from the user wallet information (step S504).

Based on the wallet address that is hit in the search at step S504, the wallet reference unit 152 then transmits the wallet reference request to the BC network 70 in which a record is made (step S505).

In response to the request, the BC network 70 transmits a response containing the wallet information corresponding to the wallet address, for example, the balance of tokes that is an example of crypto-assets to the relay device 100 (step S506).

Thereafter, the wallet reference unit 152 sends the wallet information that is received as the response from the BC network 70 to the administrator terminal device 30 via the APP server 50 (step S507 and step S508) and ends the process.

In the sequence chart illustrated in FIG. 7, the administrator terminal device 30 is exemplified as an example of a device that makes the wallet reference request; however, the device is not limited to this, and the device that makes the wallet reference request may be the user terminal device 10.

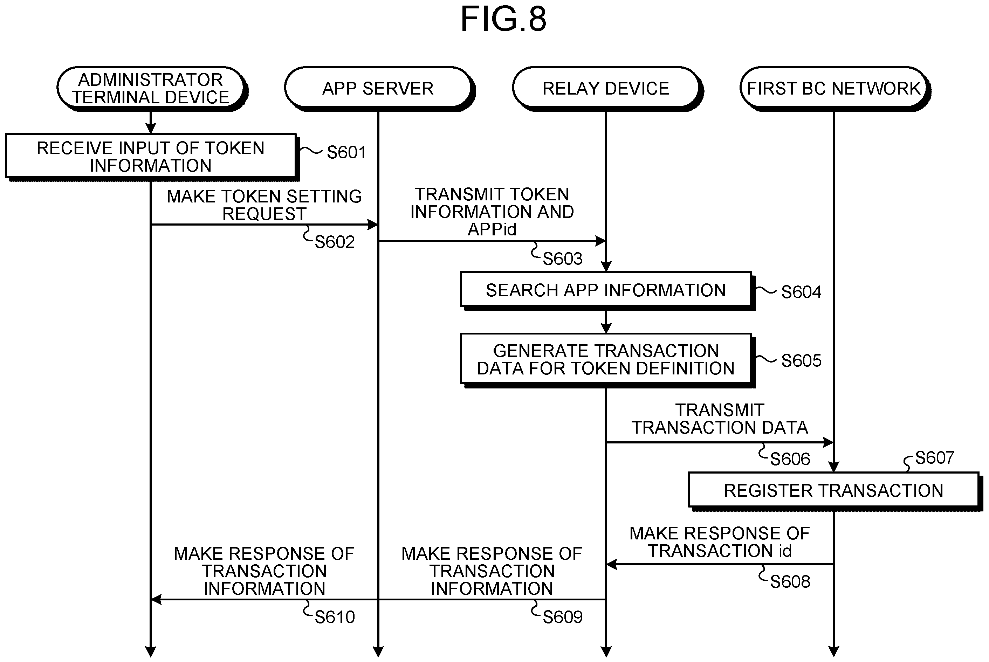

The token definition unit 153 is a processing unit that relays token definition. FIG. 8 is a sequence chart illustrating a procedure of a token definition process. As illustrated in FIG. 8, the administrator terminal device 30 receives an input of content relating to a definition of a token via a token information window that the token definition unit 153 provides (step S601).

For example, the token information window can incorporate GUI parts enabling specification of items, such as a token name and a unit, an administrator, and a password, as an example of the content relating to the definition of the token.

After receiving the input of the token information, the administrator terminal device 30 transmits a token definition request containing the token information that is received at step S601 to the APP server 50 (step S602) .

The APP server 50 having received the token definition request in this manner further incorporates an APPid of an application by which the token is used in the token definition request and transmits the request to the relay device 100 (step S603).

The token definition unit 153 of the relay device 100 searches the entries contained in the APP information for an entry corresponding to the APPid contained in the token definition request that is received from the APP server 50 (step S604).

Subsequently, the token definition unit 153 generates transaction data for token definition based on the token information that is received via the token information window (step S605). The token definition unit 153 then makes a request to register the transaction data for token definition that is generated at step S605 to the BC network 70 in which a record is made (step S606).

In response to the request, the BC network 70 registers the transaction data for token definition that is received from the relay device 100 in the blockchain (step S607). The BC network 70 then transmits a response containing a transaction id of the transaction data that is registered in the blockchain at step S607 to the relay device 100 (step S608).

Thereafter, the token definition unit 153 sends the transaction id that is received from the BC network 70 to the administrator terminal device 30 via the APP server 50 (step S609 and step S610) and ends the process.

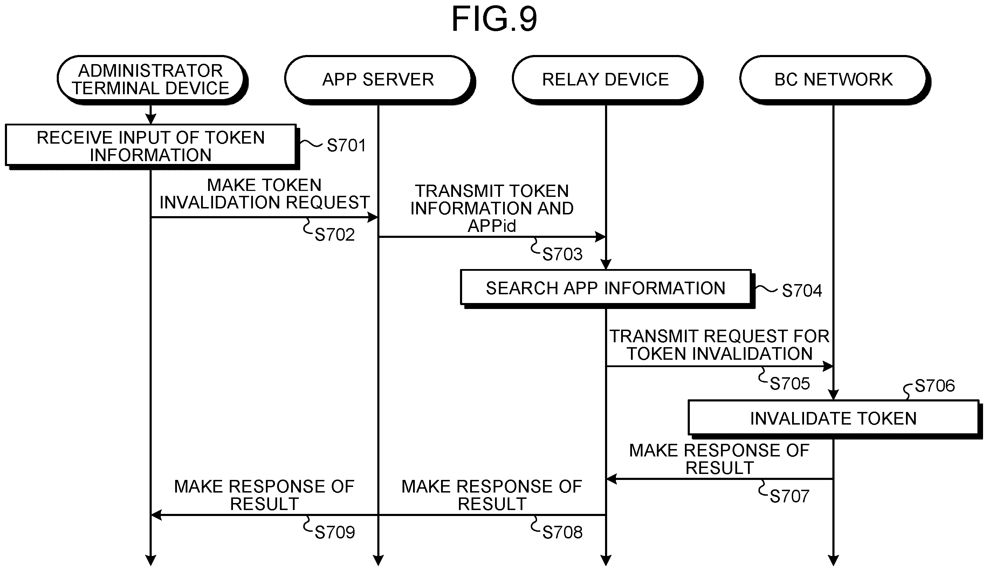

The token invalidation unit 154 is a processing unit that relays invalidation of a token. FIG. 9 is a sequence chart illustrating a procedure of a token invalidation process. As illustrated in FIG. 9, the administrator terminal device 30 receives an input of content relating to token invalidation via a token information window that the token invalidation unit 154 provides (step S701).

For example, the token information window can incorporate GUI parts enabling specification of items, such as a token name and a password, as an example of the content relating to token invalidation.

After receiving the input of the token information, the administrator terminal device 30 transmits a token invalidation request containing the token information that is received at step S701 to the APP server 50 (step S702) .

The APP server 50 having received the token invalidation request in this manner further incorporates an APPid of an application by which the token is used in the token invalidation request and transmits the request to the relay device 100 (step S703).

The token invalidation unit 154 of the relay device 100 searches the entries contained in the APP information for an entry corresponding to the APPid contained in the token invalidation request that is received from the APP server 50 (step S704).

Subsequently, the token invalidation unit 154 transmits a request for token invalidation based on the token information that is received via the token information window to the BC network 70 in which a record is made (step S705).

In response to the request, the BC network 70 invalidates the token corresponding to the token information that is specified by the request for token invalidation received from the relay device 100 (step S706). The BC network 70 then transmits a response containing a result of the token invalidation at step S706, for example, a success or a failure to the relay device 100 (step S707).

Thereafter, the token invalidation unit 154 sends a result of the token invalidation that is received from the BC network 70 to the administrator terminal device 30 via the APP server 50 (step S708 and step S709) and ends the process.

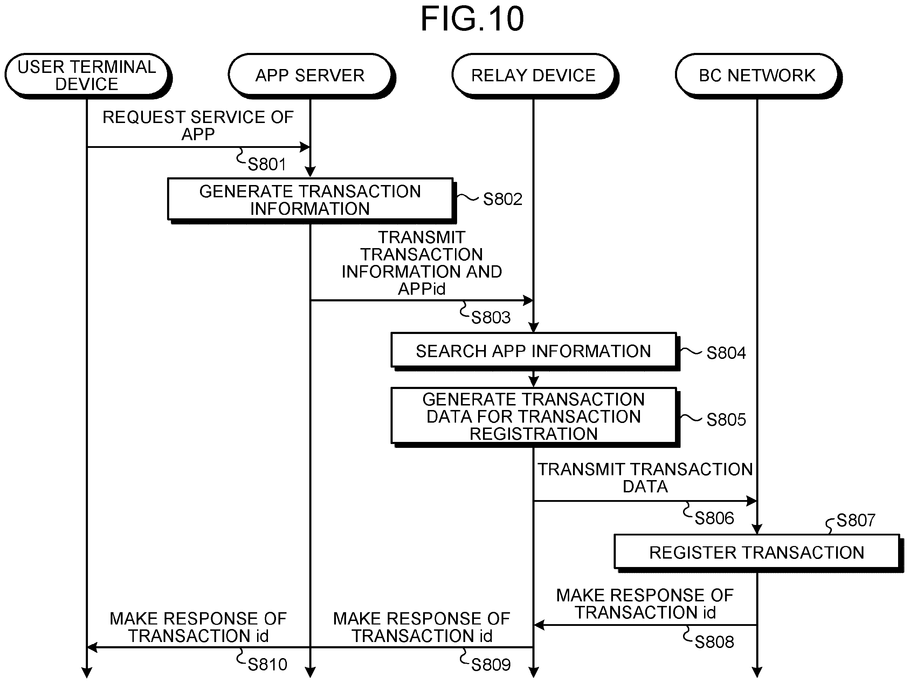

The Tx registration unit 155 is a processing unit that relays registration of a transaction. FIG. 10 is a sequence chart (1) illustrating a procedure of a transaction registration process. FIG. 10 illustrates an example in which transaction information is generated according to the usage of the application in the user terminal device 10 as an aspect only.

As illustrated in FIG. 10, the user terminal device 10 makes a service that the application executed by the APP server 50 (step S801). Accordingly, use of the application is started.

Thereafter, when the usage of the application in the user terminal device 10 meets a rule that is defined previously, the APP server 50 generates transaction information based on the rule (step S802).

It is possible to define a condition part and a consequence part in the aforementioned rule. For example, taking a comment posting tool as an example, it is possible to set the number of times of question comments of "five times", or the like, in the condition part and it is possible to set, in the consequence part, content of transaction of "issuance of 10 tokens from the issuer to the user" that is generated when the condition that is set in the condition part is met. Under such a rule, when the number of times of question comments of the user reaches five times, transaction information on provision of 10 tokens from the issuer to the corresponding user is generated.

Thereafter, the APP server 50 transmits the transaction information that is generated at step S802 and the APPid of the application that is being used by the user terminal device 10 to the relay device 100 (step S803).

The Tx registration unit 155 of the relay device 100 searches the entries contained in the APP information for an entry corresponding to the APPid that is received from the APP server 50 (step S804).

Subsequently, the Tx registration unit 155 generates transaction data for transaction registration based on the transaction information that is received from the APP server 50 (step S805). At that time, when the token transaction information is on token exchange, the transaction data for transaction registration can be generated with reference to a wallet address of a private key of a user who transmits a token. The Tx registration unit 155 then makes a request to register transaction data that is generated at step S805 to the BC network 70 in which a record is made and that is hit in the search at step S804 (step S806).

In response to the request, the BC network 70 registers the transaction data that is received from the relay device 100 in the blockchain (step S807). The BC network 70 then transmits a response containing a transaction id of the transaction data that is registered in the blockchain at step S807 to the relay device 100 (step S808). At step S807, needless to say, it is possible to execute registration of the transaction only when information necessary to register the transaction completes.

Thereafter, the Tx registration unit 155 transmits the transaction id that is received from the BC network 70 to the user terminal device 10 via the APP server 50 (step S809 and step S810) and ends the process.

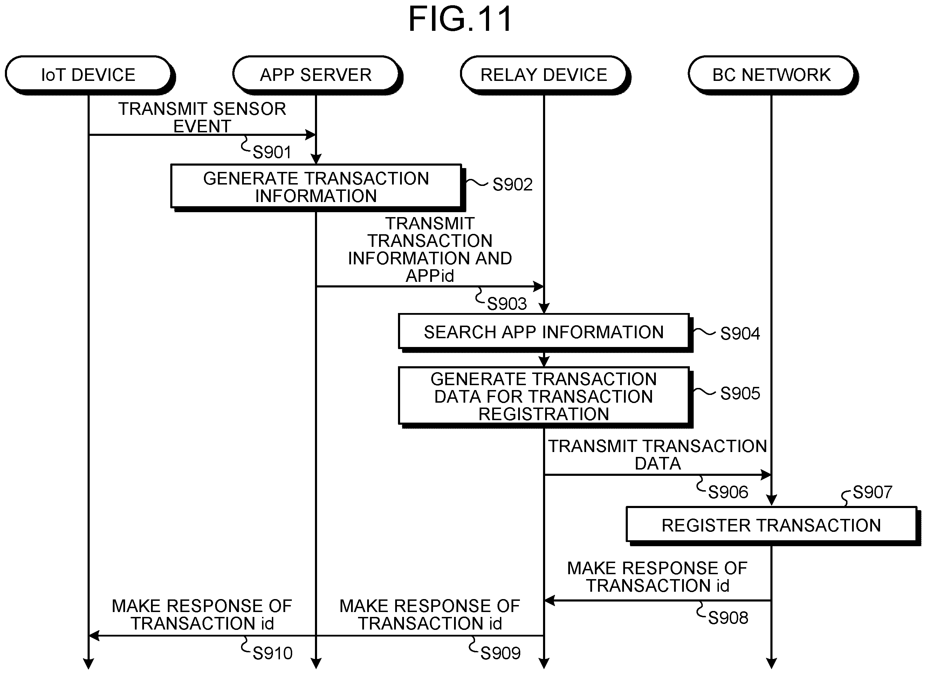

FIG. 11 is a sequence chart (2) illustrating a procedure of a transaction registration process. FIG. 11 illustrates an example in which transaction information is generated according to the status of sensing by the IoT device 20 as an aspect only.

As illustrated in FIG. 11, the IoT device 20 uploads a sensor value that is measured by a sensor to the APP server 50 (step S901).

Thereafter, when the status of sensing by the IoT device 20 the APP server 50 meets a rule that is defined previously, the APP server 50 generates transaction information based on the rule (step S902).

It is possible to define a condition part and a consequence part in the aforementioned rule. For example, taking the case where a sensor is an image sensor as an example, it is possible to set the number of times of work in holidays of "three times", or the like, in the condition part and it is possible to set, in the consequence part, content of transaction of "issuance of 10 tokens from the issuer to the user" that is generated when the condition that is set in the condition part is met. Under such a rule, when the face of the user is recognized in three holidays by image recognition AI (Artificial Intelligence), or the like, transaction information on provision of 10 tokens from the issuer to the corresponding user is generated.

Thereafter, the APP server 50 transmits the transaction information that is generated at step S902 and the APPid of the application that monitors the status of sensing to the relay device 100 (step S903).

The Tx registration unit 155 of the relay device 100 searches the entries contained in the APP information for an entry corresponding to the APPid that is received from the APP server 50 (step S904).

Subsequently, the Tx registration unit 155 generates transaction data for transaction registration based on the transaction information that is received from the APP server 50 (step S905). At that time, when the token transaction information is on token exchange, the transaction data for transaction registration can be generated with reference to a wallet address of a private key of a user who transmits a token. The Tx registration unit 155 then makes a request to register transaction data that is generated at step S905 to the BC network 70 in which a record is made and that is hit in the search at step S904 (step S906).

In response to the request, the BC network 70 registers the transaction data that is received from the relay device 100 in the blockchain (step S907). The BC network 70 then transmits a response containing a transaction id of the transaction data that is registered in the blockchain at step S907 to the relay device 100 (step S908). At step S907, needless to say, it is possible to execute registration of the transaction only when information necessary to register the transaction completes.

Thereafter, the Tx registration unit 155 transmits the transaction id that is received from the BC network 70 to the IoT device 20 via the APP server 50 (step S909 and step S910) and ends the process.

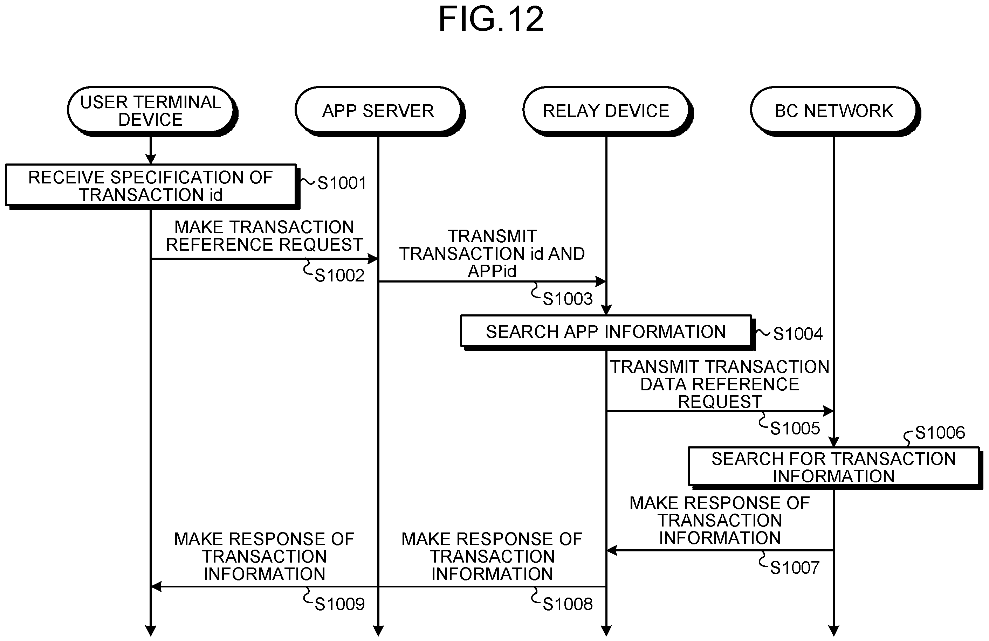

The Tx reference unit 156 is a processing unit that relays reference of a transaction. FIG. 12 is a sequence chart illustrating a procedure of a transaction registration process. As illustrated in FIG. 12, the user terminal device 10 receives specification of a transaction id that identifies a transaction to be referred to (step S1001) .

The user terminal device 10 then transmits a transaction reference request containing a transaction id of which specification is received at step S1001 to the APP server 50 (step S1002).

Thereafter, the APP server 50 further incorporates an APPid of an application that the user uses in the transaction reference request that is received from the use terminal device 10 and transmits the request to the relay device 100 (step S1003).

The Tx reference unit 156 of the relay device 100 searches the entries contained in the APP information for an entry corresponding to the APPid that is received from the APP server 50 (step S1004).

The Tx reference unit 156 then transmits the transaction reference request that is received from the APP server 50 to the BC network 70 in which a record is made and that is hit in the search at step S1004 (step S1005).

In response to the request, the BC network 70 searches for transaction data corresponding to the transaction id contained in the request received from the relay device 100 (step S1006). The BC network 70 then transmits a response containing transaction data that is hit in the search at step S1006 to the relay device 100 (step S1007).

Thereafter, the Tx reference unit 156 transmits the transaction data that is received from the BC network 70 to the user terminal device 10 via the APP server 50 (step S1008 and step S1009) and ends the process.

The SC registration unit 157 is a processing unit that relays registration of a smart contract. The smart contract is a system that automatically enforces a contract in a blockchain and, for example, is realized as a computer program that is written in the blockchain. The BC network 70 may be caused to automatically execute registration of transaction data according to a rule that is defined in such a smart contract.

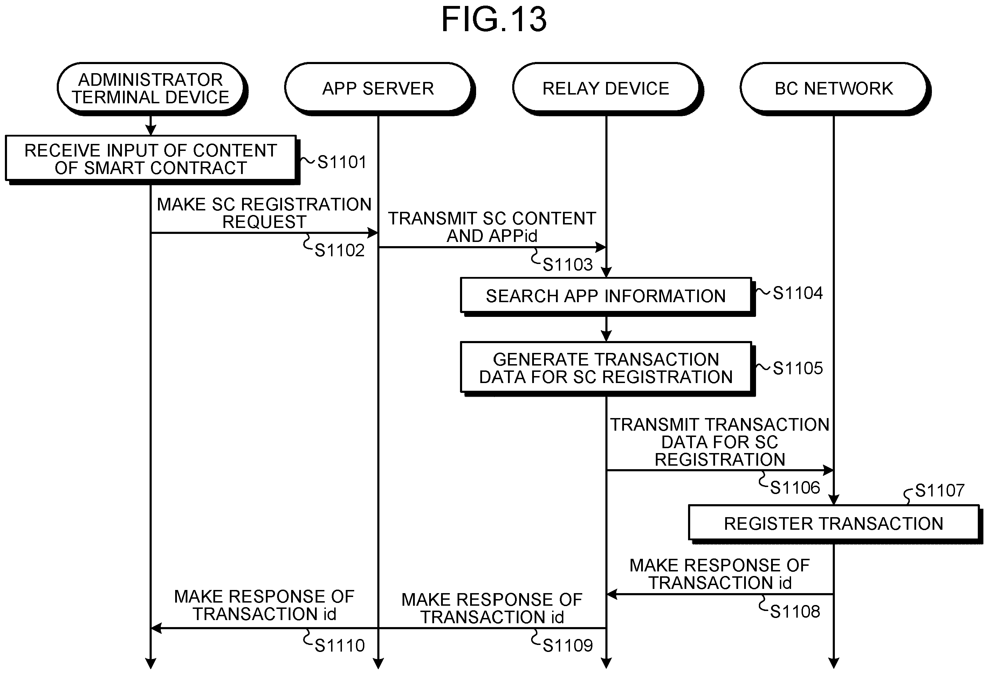

FIG. 13 is a sequence chart illustrating a procedure of a smart contract registration process. As illustrated in FIG. 13, the administrator terminal device 30 receives an input of content of a smart contract via a SC registration window that the SC registration unit 157 provides (step S1101).

After receiving the input of the content of the smart contract, the administrator terminal device 30 transmits a smart contract registration request containing the content of the smart contract that is received at step S1101 to the APP server 50 (step S1102).

The APP server 50 having received the smart contract registration request in this manner further incorporates an APPid of an application by which the smart contract is used in the smart contract registration request and transmits the request to the relay device 100 (step S1103).

The SC registration unit 157 of the relay device 100 searches the entries contained in the APP information for an entry corresponding to the APPid contained in the smart contract generation request that is received from the APP server 50 (step S1104).

Subsequently, the SC registration unit 157 generates transaction data for SC registration based on the content of the smart contract that is received via the SC registration window (step S1105). The SC registration unit 157 then makes a request to register the transaction data for SC registration that is generated at step S1105 to the BC network 70 in which a record is made and that is hit at step S1104 (step S1106).

In response to the request, the BC network 70 registers the transaction data for SC registration that is received from the relay device 100 in the blockchain (step S1107). The BC network 70 then transmits a response containing a transaction id of the transaction data that is registered in the blockchain at step S1107 to the relay device 100 (step S1108).

Thereafter, the SC registration unit 157 transmits the transaction id that is received from the BC network 70 to the administrator terminal device 30 via the APP server 50 (step S1109 and step S1110) and ends the process.

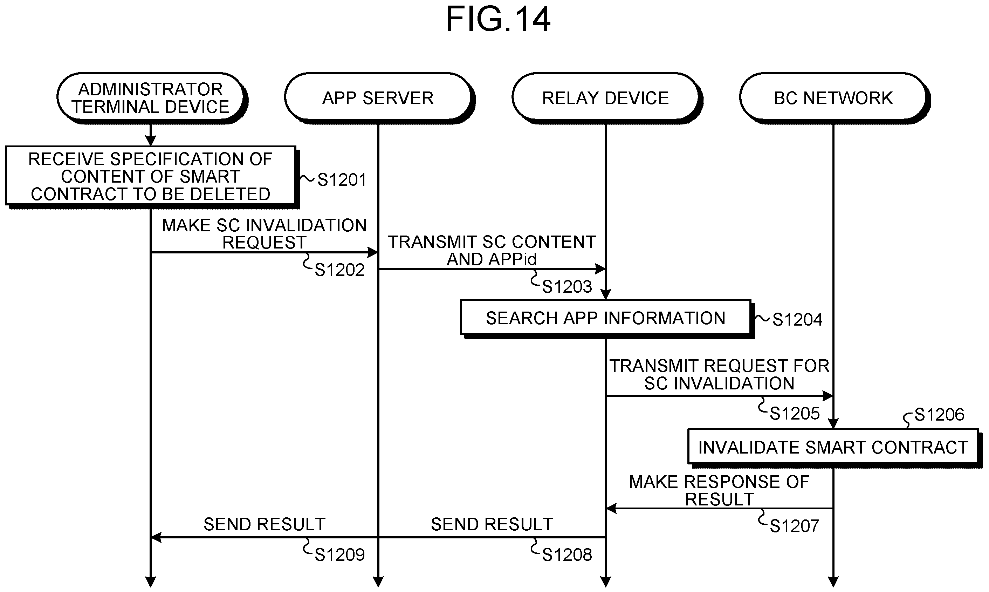

The SC invalidation unit 158 is a processing unit that relays invalidation of a smart contract. FIG. 14 is a sequence chart illustrating a procedure of a smart contract invalidation process. As illustrated in FIG. 14, the administrator terminal device 30 receives an input of a transaction id corresponding to a smart contract to be deleted via a SC deletion window that the SC invalidation unit 158 provides (step S1201).

After receiving the input of the transaction id, the administrator terminal device 30 transmits a SC invalidation request containing the transaction id that is received at step S1201 to the APP server 50 (step S1202).

The APP server 50 having received the SC invalidation request in this manner further incorporates an APPid of an application corresponding to the smart contract and transmits the request to the relay device 100 (step S1203).

The SC invalidation unit 158 of the relay device 100 searches the entries contained in the APP information for an entry corresponding to the APPid contained in the SC invalidation request that is received from the APP server 50 (step S1204) .

Subsequently, the SC invalidation unit 158 then makes a SC invalidation request based on the transaction id that is received via the SC deletion window to the BC network 70 in which a record is made and that is hit in the search at step S1204 (step S1205).

In response to the request, the BC network 70 invalidates registration of the smart contract corresponding to the transaction id that is specified by the SC invalidation request that is received from the relay device 100 (step S1206). The BC network 70 then transmits a response containing a result of SC invalidation at step S1206, for example, a success or a failure to the relay device 100 (step S1207).

Thereafter, the SC invalidation unit 158 sends a result of the SC validation that is received from the BC network 70 to the administrator terminal device 30 via the APP server 50 (step S1208 and step S1209) and ends the process.

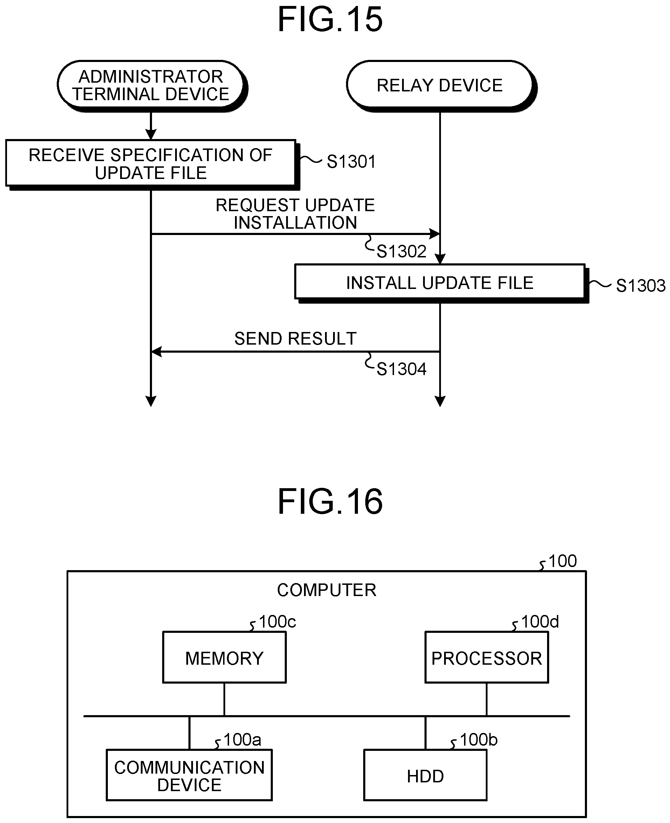

The update unit 170 is a processing unit that executes an update of the above-described relay program. FIG. 15 is a sequence chart illustrating a procedure of an update process. As illustrated in FIG. 15, the update unit 170 receives specification of an update file for the above-described relay program from the administrator terminal device 30 (step S1301).

The "update file" herein can be generated by a party belonging to the business operator of the transaction recording system 1, for example, a system administrator, or the like, as an aspect from an aspect that a change in the specification of the blockchain platform is dealt with.

After receiving the specification of the update file, the administrator terminal device 30 makes a request to install the update file to the relay device 100 (step S1302) .

The update unit 170 of the relay device 100 having received the request to install the update file in this manner installs the update file (step S1303) . Thereafter, the update unit 170 transmits a response containing a result of executing the installation of the update file, for example, a success or a failure to the administrator terminal device 30 (step S1304) and ends the process.

### <One Aspect of Effect>

As described above, in the transaction recording system 1 according to the embodiment, the relay function of making a relay between the APP server 50 and the BC network 70 is constructed as an independent module. Accordingly, it is possible to update only a module corresponding to the above-described relay function in an update associated with a change in the specification of the blockchain platform. Thus, according to the transaction recording system 1 according to the embodiment, it is possible to realize a reduction of replacements of or updates in an application.

### <Example of Application>

The above-described embodiment represents an example and various applications can be made.

### (1) Application

As for the above-described embodiment, the example in which it is realized as a Web application that is executed by the APP server 50 is taken; however, it may be realized as a distributed application that is executed by the user terminal device 10 or the IoT device 20. In this case, the APP server 50 need not necessarily be set in the transaction recording system 1.

### <Application Example>

The above-described embodiment represents an example and various applications can be made.

The process procedure, control procedure, specific names, and information including various types of data and parameters that are presented in the description above and the drawings are changeable freely unless otherwise noted.

Each component of each device illustrated in the drawings is a functional idea and need not necessarily be configured physically as illustrated in the drawings. In other words, specific modes of distribution and integration of devices are not limited to those illustrated in the drawings. In other words, all or part of the devices can be configured by functional or physical distribution or integration in any unit according to various types of load and usage.

Furthermore, all or given part of each processing function implemented by each device can be realized by a CPU or a program that is analyzed and executed by the CPU or can be realized as hardware according to a wired logic.

### <Hardware>

An example of a hardware configuration of the relay device 100 according to the above-described embodiment will be described next. FIG. 16 is a diagram illustrating the example of the hardware configuration. As illustrated in FIG. 16, the relay device 100 includes a communication device 100a, a HDD (Hard Disk Drive) 100b, a memory 100c, and a processor 100d. The units illustrated in FIG. 12 are connected mutually by a bus, or the like.

The communication device 100a is a network interface card, or the like, and communicates with another server. The HDD 100b stores a program that causes the functions illustrated in FIG. 2 to run and data.

The processor 100d reads the program that executes the same process as that of each of the processing units illustrated in FIG. 2 from the HDD 100b, or the like, and loads the program in the memory 100c, thereby running the process that executes each of the functions illustrated in FIG. 2, etc. For example, the process executes the same function as that of each of the processing units that the relay device 100 includes. Specifically, the processor 100d reads the program with the same functions as those of the request receiver 110, the APP administrator 130, the Tx administrator 150, and the update unit 170.

As described above, the relay device 100 operates as a computer that executes an relay method by reading and executing the program. The relay device 100 may read the above-described program from a recording medium using a medium reading device and execute the read program, thereby realizing the same functions as those of the above-described embodiment. Other programs according to other embodiments are not limited to being executed by the relay device 100. For example, the present invention is similarly applicable to the case where another computer or another server executes the program or the computer and the server execute the program cooperatively.

The program can be distributed via a network, such as the Internet. The program can be recorded in a computer-readable recording medium, such as a hard disk, a flexible disk (FD), a CD-ROM, a MO (Magneto-Optical disk), or a DVD (Digital Versatile Disc), can be read by a computer from the recording medium, and thus can be executed.

### Reference Signs List

- 1: TRANSACTION RECORDING SYSTEM

- 10: USER TERMINAL DEVICE
- 20: IoT DEVICE
- 30: ADMINISTRATOR TERMINAL DEVICE
- 50: APP SERVER
- 70: BC NETWORK
- 100: RELAY DEVICE
- 110: REQUEST RECEIVER
- 130: APP ADMINISTRATOR
- 131: APP REGISTRATION UNIT
- 132: APP DELETION UNIT
- 133: APP EDITOR
- 150: Tx ADMINISTRATOR
- 151: WALLET GENERATOR
- 152: WALLET REFERENCE UNIT
- 153: TOKEN DEFINITION UNIT
- 154: TOKEN INVALIDATION UNIT
- 155: Tx REGISTRATION UNIT
- 156: Tx REFERENCE UNIT
- 157: SC REGISTRATION UNIT
- 158: SC INVALIDATION UNIT
- 170: UPDATE UNIT

## Claims

1. A transaction recording system comprising:
an application execution unit that executes an application that generates transaction information on crypto-assets;
a relay unit that executes a relay program that makes a relay between the application and a blockchain network in which the transaction information is recorded; and
an update unit that executes an update in the relay program.

2. The transaction recording system according to claim 1, wherein the relay unit receives specification of a first blockchain platform and makes a request to register transaction data that is generated based on the transaction information to a first blockchain network corresponding to the first blockchain platform among a plurality of blockchain networks.

3. The transaction recording system according to claim 2, wherein the relay unit receives specification of a second blockchain platform to which a change is made from the first blockchain platform and makes a request to register transaction data that is generated based on the transaction information to a second blockchain network corresponding to the second blockchain platform.

4. The transaction recording system according to claim 3, wherein the relay unit transmits a request to register transaction data that the first blockchain network records in a blockchain until specification of the second blockchain platform is received to the second blockchain network.

5. The transaction recording system according to claim 4, wherein the relay unit generates a list of users based on the transaction data that the first blockchain network records in the blockchain and transmits a request to generate wallets of the respective users based on the list of the users to the second blockchain network.

6. A transaction recording method comprising:
executing an application that generates transaction information on crypto-assets;
executing a relay program that makes a relay between the application and a blockchain network in which the transaction information is recorded; and
executing an update in the relay program.

7. A relay device comprising:
a relay unit that executes a relay program that makes a relay between an application that generates transaction information on crypto-assets and a blockchain network in which the transaction information is recorded; and
an update unit that executes an update in the relay program.

8. An update program that causes a relay device to execute a process comprising executing an update on a relay program that makes a relay between an application that generates transaction information on crypto-assets and a blockchain network in which the transaction information is recorded.
